# EUROPEAN PATENT APPLICATION

(11) **EP 2 224 399 A1**
(43) Date of publication of application: **01.09.2010**
(21) Application number: 09305173.8
(22) Date of filing: 25.02.2009
(51) Int. Cl.: G06Q 50/00

(54) **Interline revenue share optimization method**

(71) Applicant: Amadeus S.A.S., 06410 Biot (FR)
(72) Inventor: Arnaud, Romain, 06130 Grasse (FR); Claverie, Béatrice, 06000 Nice (FR); Raufaste, Nathalie, 06600 Antibes (FR)
(74) Representative: Decobert, Jean-Pascal

(57) **Abstract**

A carrier's interline revenue share optimization method in which the carrier is involved in several interline multi-segment journeys with other partner carriers. Each of the involved carriers operate at least one segment of the interline multi-segment journeys and each of these journeys is associated with a fare. The interline revenue share optimization method utilizes a computer system and comprises the steps of a) receiving and storing in data structured storing means of the computer system memory, input data that comprises a fixed set of tickets including the journey and the associated fare, a fixed set of prorate factors, a fixed set of partner carriers' interline rules, a set of carrier's interline rules, an interline revenue share determining algorithm and an optimization algorithm, b) defining the variables to optimize, c) splitting the fares of the tickets between the carrier and the partner carriers and calculating an objective function as the carrier's interline revenue share, d) optimizing the objective function and obtaining the optimized set of carrier's interline variables by utilizing a processor of the computer system and e) providing via an output device of the computer system the optimized set of carrier's interline variables.

## Description

### FIELD OF THE INVENTION

The present invention relates generally to a method for optimizing the interline revenue share of a carrier that participates in many interline multi-segment journeys with at least another partner carrier.

### BACKGROUND OF THE INVENTION

Nowadays, carriers such as airline, railway, coastal navigation and coach companies, can operate by themselves only limited travels not covering the globe or specific route networks that satisfy a passenger's needs. For that reason, passengers often have to book their itineraries through different carriers and many times in different currencies making the travel booking hard, inefficient and time consuming.

However, an interline travel system has been created to enable the booking of a single itinerary that contains travels operated by different carriers. The passenger who uses the interline travel system is able to book an itinerary through a single carrier by paying one single price (i.e. fare), in one currency, covering the whole travel. Usually, a "through fare" is set for the whole multi-segment journey, rather than charging the separate fares applying for each individual segment and this "through fare" is often lower than the sum of the separate fares.

In an interline multi-segment journey, at least two carriers are involved.
The itinerary for a complete interline multi-segment journey is issued by a first carrier which collects the payment from the customer and is usually called the "validating" carrier. After issuance, settlements are made on the itinerary between the "validating" carrier and the other carrier(s) involved in the interline multi-segment journey that is/are usually called the "participating" carrier(s).

The efficient operation of the interline travel system depends on an interline system between all the carriers involved in the interline multi-segment journey. This system ensures the sharing of the revenue collected by the validating carrier and is based on interline agreements between all the carriers involved.

The simplest interline travel system shares the revenue according to the pro rata of the total traveled mileage. However, this system tends to be favoring for carriers operating long trips since it doesn't consider the operating and traveling fixed cost that is independent of the mileage traveled and this cost may be particularly high especially in the case of airline carriers.

In order to provide a more fair revenue sharing between all the carriers involved in an interline travel, prorate factors have been introduced. The prorate factor is a weighted mileage considering the fixed cost difference between short and long travels but also between different geographical areas ("area weighting"). This prorate factors interline travel system is called "Straight Rate Proration" (SRP) and is also based in a pro rata calculation though it uses prorate factors instead of mileage.

In the case of airline carriers involved in an interline multi-segment journey, the Straight Rate Proration is part of the International Air Transport Association (IATA) proration rules known as Multilateral Prorate Agreements (MPA). These rules are summarized in a book published every quarter by IATA and called Prorate Manual Passenger (PMP).

However, in some cases there are still unfair revenue differences between the carriers involved in an interline multi-segment journey. The main drawback of the SRP is that the interline revenue share of the "participating" carrier(s) is a proportion of the ticket amount fixed by the "validating" carrier and depends on it.

In order to overcome this drawback, Provisos interline travel system has been created. This system is based on some "flat amounts" published by each of the carriers involved in an interline multi-segment journey. These will be named in the following "interline rules", are composed of criteria and value, and more particularly include:
- base amounts rules, whose criteria are a) a carrier, b) a segment (board point/off point) of the interline multi-segment journey and c) a class of service (first, business, economy). The value of the rule is the base amount, i.e. a flat amount in a currency. These amounts are also known as "sector fares".
- a set of rules called provisos and determining if the base amount is applicable and at which percentage. The criteria of the proviso rules are: a) the carrier, b) the class of service (first, business, economy), c) the type of fare for the whole journey (e.g. the carrier may require 100% of the base amount for unrestricted fares and 80% of the base amount for low promotional fares, d) the type of journey (e.g. whether it is wholly within Europe or part of a journey between Europe and North America in the case of airline carriers), and e) the type of ATBP (Amount To Be Prorated, see below) (e.g. whether the ATBP is wholly within Europe). The value of the rule is a percentage, which applies to the base amount.

Every carrier involved in an interline multi-segment journey can file base amounts for the segments on which it provides service. The carrier can also decide for its provisos.

Furthermore, a mechanism exists ensuring that filed Provisos (base amounts and provisos) are not applied where they result in an unreasonably low interline revenue share for any of the carriers involved. In that case, SRP is applied.

In the case of airline carriers involved in an interline multi-segment journey, Provisos are applied to Amounts to be Prorated (ATBP). The ATBP are described in the Prorate Manual Passenger of the International Air Transport Association (IATA). An ATBP is a fare associated to one or several segments (i.e. for a trip with 5 segments there can be between 1 and 5 ATBP). The fare system is responsible to build the Fare Calculation line containing the ATBP data that will be reported at issuance time. From a prorating point of view each ATBP behaves independently. The total fare of the ticket is the sum of the ATBPs.

The Provisos system of airline carriers is also part of IATA Multilateral Prorate Agreements (MPA), and airline carriers file each quarter their base amounts and provisos to the Prorate Agency. The base amounts and provisos are in turn published quarterly to all airlines signatory of the MPA.

The interline revenue share that corresponds to each carrier involved in a multi-segment interline journey directly depends on the Provisos filed by the same. In that respect, it is a major need for a carrier to optimize its Provisos. The temptation for the carrier is to file as high as possible Provisos to the Prorate Agency. However, for a given ticket, when the Proviso is too high, the proration will revert to Straight Rate Prorating (when partner carrier(s) receive less that Minimum Prorate Rule percentage). As the carrier's interline share calculated in SRP may be significantly lower than the Proviso filed, the benefit of the Provisos is lost if they are filed inappropriately high. Therefore, the optimization of the Provisos is not obvious, as the optimal value depends on the tickets fares, the carrier's Provisos rules, the Provisos rules filed by other interline partner carriers, and the prorate factors.

Currently, the revenue optimization takes place at product level and does not consider the whole sale (global product) which also includes the interline revenue shares of partner carrier(s) involved in an interline multi-segment journey. Specifically, in the transportation industry the revenue optimization is done on a particular segment independently of the rest of the journey by accepting or denying the booking and increasing or lowering the fare paid to the passenger according to the date.

This invention provides a method that maximizes the interline revenue share of a carrier involved as "validating" or "participating" in several interline multi-segment journeys. This is succeeded by the application of the interline revenue share optimization method that comes to maximizing the combination of interline revenue shared by percentages (SRP) and interline revenue shared by flat amounts (Provisos).

### SUMMARY OF THE INVENTION

The invention describes an optimization method of the interline revenue share of a carrier (such as airline, railway, coastal navigation or coach company) involved in several interline multi-segment journeys.

Our invention is applicable in other transportation industries than the airline, but the vocabulary would be different. The invention is applicable as long as the splitting of the revenue is a) a flat amount, or b) a percentage of the base amount determined by a set of rules, or c) a mix of both a) and b).

Each journey is composed of several segments, each of which has a service provider (a.k.a. carrier). Each journey is associated with an applicable fare; the journey and the applicable fare are grouped in a ticket, which materializes the contract between passenger and transportation companies. The fare of the ticket is split between transportation companies according to their interline revenue share, which is determined by a proration algorithm. When there is only one carrier involved in the journey, it claims the whole fare.

In the following, a carrier ("validating" or "participating") will be the one that uses the interline revenue share optimization method of the invention in order to maximize its revenue share in several journeys, especially in the case of interline multi-segment journeys.

The method is performed by utilizing a computer system and comprises the following steps of:
- 1. receiving and storing in data structured storing means of the computer system memory, input data that comprises a) a fixed set of tickets (i.e. journey and associated fare), b) a fixed set of prorate factors (common to all carriers), c) a fixed set of partner carriers' interline rules (i.e. fixed base amounts and provisos), d) a set of carrier's interline rules, e) an interline revenue share determining algorithm and f) an optimization algorithm,
- 2. defining the variables to optimize: in the set of carrier's interline rules composed of criteria and value, the criteria are fixed and the values are variables (carrier's interline variables) subject to the optimization,
- 3. splitting the fares of the tickets between the carrier and the partner carriers and calculating an objective function as the carrier's interline revenue share.
- 4. optimizing the objective function and obtaining the optimized set of carrier's interline variables by utilizing a processor of the computer system,
- 5. providing via an output device of the computer system the optimized set of carrier's interline variables.

The computer system in which the above interline revenue share optimization method is applied may comprise at least one server.

The fixed set of partner carriers' interline rules (step1) comprises a set of Provisos (base amounts rules and provisos rules) filed by the partner carriers while the fixed set of prorate factors is common to both the carrier and the partner carrier and indicates for each segment of the same the prorate factor used for the Straight Rate Proration.

An optional step of filtering the fixed set of tickets is performed for reducing the total amount of data to process. For example, the filtering step removes from the fixed set of tickets all tickets for which no Proviso exists, or for which there is no interline (no other carrier involved). Also, the carrier can assign weights to this fixed set of tickets. For example if a weight of zero is applied to a subset of tickets, the optimization process of the last is cancelled.

More precisely, these weights can be assigned to each ATBP of a ticket.

The interline revenue share determining algorithm used in the interline revenue share splitting step (step 3) is a prorating algorithm: it determines interline revenue shares by splitting the fares of the set of tickets (historical and/or fictitious data) between carriers. The prorating algorithm is able to perform at least Straight Rate Proration and Proviso Proration.

On the other hand, the optimization algorithm used in the interline revenue share optimization method (step 4), optimizes the set of carrier's interline variables that comprise a set of carrier's own Provisos (variable base amounts and provisos percentages).

The objective of the invention is to provide an interline revenue share optimization method that ensures the highest possible interline revenue share for a carrier involved in several multi-segment trips in which at least another partner carrier participates.

Instructions corresponding to the method's steps may be incorporated in a computer program product suitable for an execution by a computer device such as a personal computer.

Further objects, features and advantages of the present invention will become apparent to the ones skilled in the art upon examination of the following description in reference to the accompanying drawings. It is intended that any additional advantages be incorporated herein.

### BRIEF DESCRIPTION OF THE DRAWINGS

FIG. 1 is a diagrammatic representation that includes the steps of an interline revenue share optimization method.
FIG. 2 is a diagrammatic representation of an example of an interline revenue share optimization method applied in airline carriers.
FIG. 3 is a diagrammatic representation of the interline revenue share earned on one ticket by the airline carrier when Provisos Proration is applied on all segments of the ATBP and the carrier is acting as the validating carrier of the ticket and is providing service ("participating") on this segment.
FIG. 4 is a diagrammatic representation of the interline revenue share earned on one ticket by the airline carrier when the carrier is acting as the participating carrier, or when at least one segment share is calculated using Straight Rate Proration.
FIG. 5 is a diagrammatic representation of the interline revenue share earned on a specific segment. It is the sum of the interline revenue share across all the tickets for which the carrier is providing a service on the segment. For each proviso, this is the function that the invention will optimize.

### DETAILED DESCRIPTION

The following detailed description of the invention refers to the accompanying drawings. While the description includes exemplary embodiments, other embodiments are possible, and changes may be made to the embodiments described without departing from the spirit and scope of the invention.
The interline revenue share optimization method is applied in a computer system which may use at least one server. This method ensures the maximum interline revenue share for a carrier involved in several interline multi-segment journeys in which at least another partner carrier participates. The interline revenue share of the carrier is part of the ticket fare that also includes the interline revenue share of at least another partner carrier involved in the interline multi-segment journey.
In the case that the carrier involved in an interline multi-segment journey is a "validating" carrier, a part of the fare collected by the same will eventually pass to at least another partner carrier also involved in the interline multi-segment journey. The aim of the carrier in that case is to minimize this part as much as possible by maximizing its own part via the interline revenue share optimization method.
In the case that the carrier involved in an interline multi-segment journey is a "participating carrier" for which the fare has been set and collected by another partner carrier ("validating" carrier) also involved in the same journey, the aim of the first is to maximize its interline revenue share via the interline revenue share optimization method.

For each ticket, the carrier will be acting either as "validating" of the ticket, or as "participating" for one of the segments of the ticket.

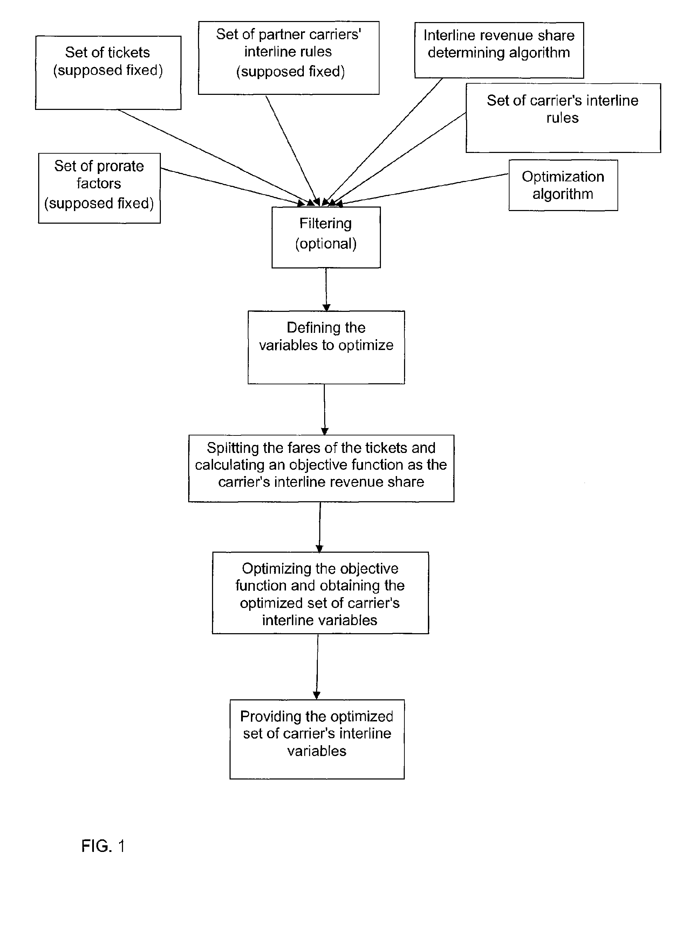

The main steps of the interline revenue share optimization method are diagrammatically depicted in FIG 1.

The first step comprises the receiving and storing in data structured storing means of the computer system memory, input data that comprises a fixed set of tickets (i.e. journey and associated fare), a fixed set of prorate factors common to all carriers, a fixed set of partner carrier's interline rules (i.e. fixed base amounts and provisos), a set of carrier's interline rules, an interline revenue share determining algorithm and an optimization algorithm. The fixed set of other partners' interline rules is filed to the Prorate Agency by the partner carrier(s) and also comprises a set of Provisos that include a fixed set of base amounts and percentages rules.

It is important to note that the fixed set of tickets comprises historical and/or fictitious data.

An optional filtering step following the first step is also depicted in FIG 1 and is used to reduce the total amount of data to process. All tickets that meet a particular criterion may be removed from the set of tickets to be optimized in order to save time and increase efficiency. For example, the filtering step removes from the fixed set of tickets all tickets for which no Proviso exists. The filtering step takes place before the optimization.

In the filtering step, the carrier may also decide to increase or reduce the weight of each fare (or ATBP) taking into account the partner carrier(s) involved in an interline multi-segment journey. In the example of airline carriers, if the fare involves only airlines that belong to the same Alliance, the airline carrier may want to remove that fare from the optimization part as the whole revenue will remain inside the Alliance. In that case, a weight of zero is assigned by the airline carrier for the fare to be removed.

The optional filtering step is followed by a step of defining the variables to optimize. In the set of carrier's interline rules composed of criteria and values, the criteria are fixed, and the values are variables (carrier's interline variables) subject to the optimization.

The next step is to split the fare of the fixed set of tickets, on which optimization is to be performed, between the carrier and at least another partner carrier involved in the interline multi-segment journey, and calculate an objective function as the carrier's interline revenue share.

Specifically, in that step, the ticket fare is split by the use of the interline revenue share determining algorithm that comprises prorating algorithms able to perform straight rate and proviso proration. For Straight Rate Proration, the split is processed according to the fixed set of prorate factors that are common to the carrier and the partner carrier(s) involved in an interline multi-segment journey, and indicate for each segment the prorate factor that should be used.

In the example of airline carriers, the Straight Rate Proration is applicable in the following cases:
- There is no Proviso rules (base amount and proviso percentage) available.
- The proviso orders reversion to Straight Rate Prorating
- The proviso Proration is not applicable because the interline revenue share of the partner carrier(s) is unreasonably low and less than the Minimum Prorate Rule Percentage. For airlines, the Minimum Prorate Rule Percentage for the period 01 June 2008 to 31 May 2009 is fixed to 12.1%.
- The proviso Proration is not applicable because the sum of the provisos of the carrier and the partner carrier(s) exceeds the Amount to be Prorated.

In the first two cases, the carrier's interline revenue share depends only on the ATBP and no Provisos optimization is possible.

In the two last cases, the carrier's interline revenue share depends on the Provisos filed by the same. If the carrier's Provisos are too high compared to the fare of the journey (i.e. Minimum Prorate Rule Percentage is not reached), the Straight Rate Proration is enforced.

After the Provisos and Straight Rate Proration application, the remaining value is attributed to the "validating" airline carrier.

The following step depicted in FIG 1 is the optimization step of the objective function and it is performed with the use of a processor of the computer system. In this step, the optimization algorithm is used to optimize the set of the carrier's interline variables that comprise the carrier's own Provisos. These Provisos include a set of variable base amounts and provisos percentages.

The final step in FIG 1 depicts the output that includes the optimized set of carrier's interline variables. The output is provided via an output device of the computer system.

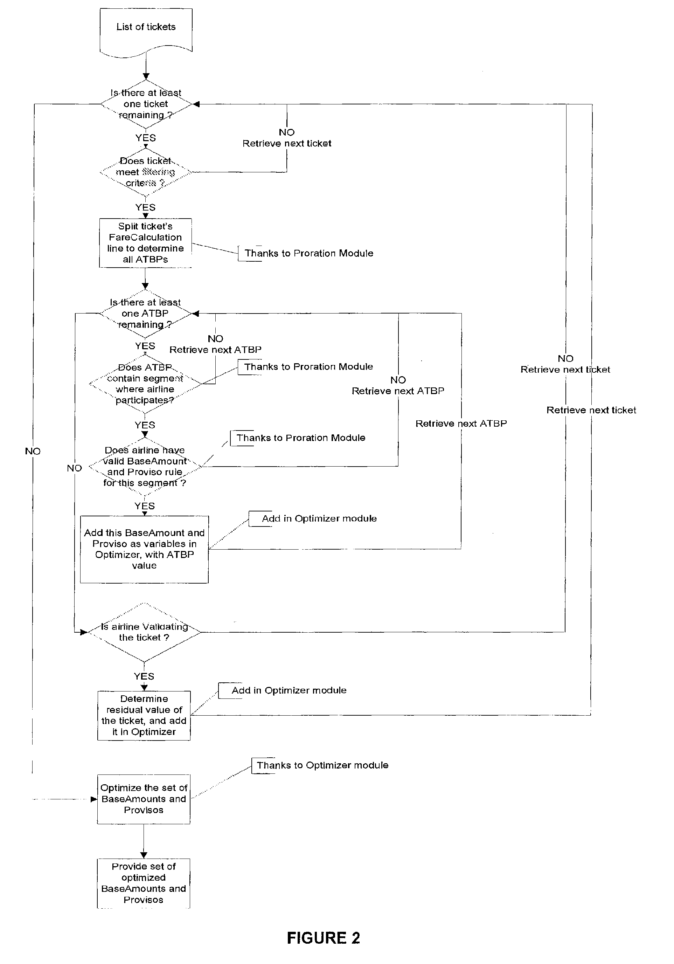

An interline revenue share optimization method example applied to airline carriers is diagrammatically represented in FIG. 2. In this example, a Proration module and an Optimizer module are used in order to provide a set of optimized base amounts and provisos for the airline carrier who uses the method.

The first step of the interline revenue share optimization method described in FIG. 2 is the checking of a list of tickets: for each ticket, the filtering criteria are applied, which may lead to the elimination of the ticket.

Next, the Proration module is used in order to split the ticket's Fare Calculation line and determine all the Amounts to be Prorated (ATBP).

For each ATBP of the ticket, the method checks if this ATBP contains a segment where the airline participates. If it does not, the next ATBP is retrieved. If it does, thanks to the Proration module, the method checks if there exists valid base amounts and provisos rules for this segment. If the base amounts and provisos rules are not valid for this segment, the next ATBP is retrieved. If they are valid, the base amounts and provisos along with the ATBP value are added as variables in the Optimizer module where they are optimized. Then, the next ATBP of the ticket is retrieved.

To finish ticket processing, it is checked if the airline carrier validates the ticket. In case it does not, the next ticket is retrieved from the list of tickets. In case that it does, the residual value of the ticket is determined and is added in the Optimizer module where the set of base amounts and provisos of this ticket are optimized and the next ticket is retrieved from the list of tickets.

A further example of the interline revenue share optimization method applied to airline carriers and explaining the application of the Straight Rate Proration, the Provisos Proration and the proration with a mix of Provisos Proration and Straight Rate Proration, is described below:

For the example, we assume that a passenger has bought a ticket in First Class (F, normal fare), for a journey from Paris to London, via Munich. The first segment Paris-Munich is operated by Air France (AF) who is the validating airline carrier that uses the interline revenue share optimization method and the second segment Munich-London is operated by British Airways (BA) who is the partner airline carrier. The journey is represented by one ATBP in the Fare Calculation line which value is 1500€.

The Fare Calculation line, which is the basis for the proration algorithm as stated in IATA Prorate Manual Passenger, could be the following:
PAR AF MUC BA LON 1500 NUC END

Concerning the Straight Rate Proration, the prorate factors, as could be found in the IATA Prorate Manual Passenger are:
- PAR-MUC: 957
- MUC-LON: 1206

This gives a sum of the prorate factors equal to 957 + 1206 = 2163.
The interline revenue shares in Straight Rate Proration for Air France and British Airways are the following:
- Air France interline revenue share: 1500€ * (957/2163) = 663.66€
- British Airways interline revenue share: 1500€ * (1206/2163) = 836.34€ Concerning the Provisos Proration, the base amounts are filed in the IATA Prorate Manual Passenger by AF and BA and are the following:

- AF: PAR-MUC, class F: 644€
- BA: MUC-LON, class F: 694€

Also, the provisos matching the ticket are filed in the IATA Prorate Manual Passenger by AF and BA and are the following:
- AF: for all trips within Europe with a normal fare, proviso is 100% of base amount
- BA: for all trips in Europe, proviso is 100% of base amount.

Accordingly, the airlines' shares in Provisos Proration are:
- Air France Proviso share: 644€*100%=644€
- British Airways Proviso share: 694€*100% = 694€

Provisos are applicable since the sum of all Proviso shares is less than the fare collected. The remaining value goes to the validating carrier:
- Validating (Air France) remaining value: 1500 - 644 - 694 = 162€

So the total revenue going to Air France if Proviso Proration is applicable, is:
ATBP-sum(other carriers Proviso share).

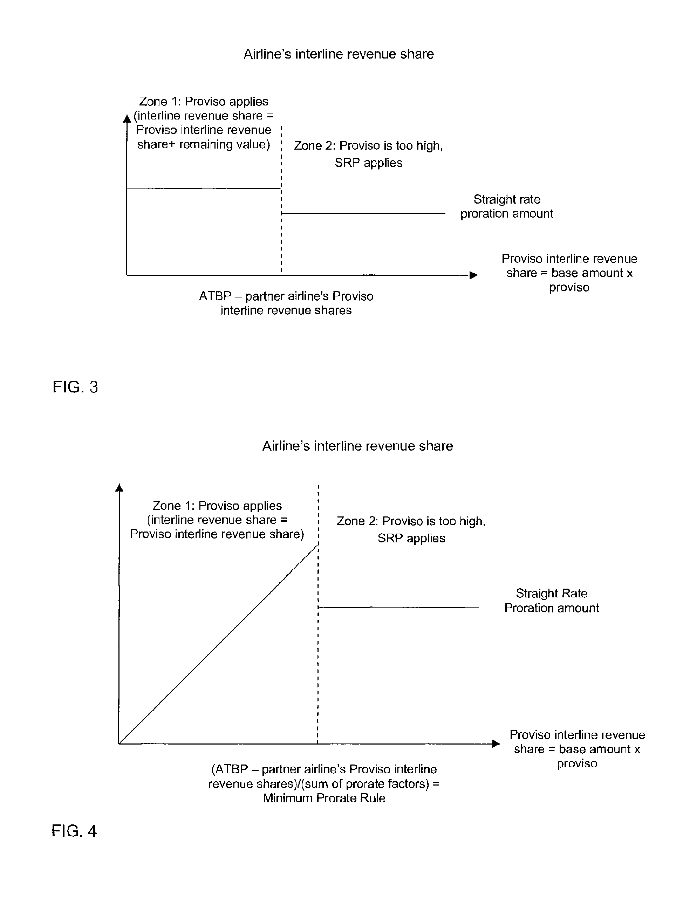

Since it depends on two constants, we can see that as long as this prorating applies the validating airline gets a constant revenue. Then, when the provisos do not apply anymore, the airlines get the share corresponding to the SRP. Specifically, the revenue earned by the airline (i.e. AF) is diagrammatically represented in FIG. 3. It is important to note that the highest interline revenue share using provisos is not necessarily higher than the share of revenue using SRP.

Concerning the Proration with a mix of Proviso Proration and SRP, the base amounts are filed by AF and BA in the IATA Prorate Manual Passenger are the following:
- AF: PAR-MUC, class F: 644€
- BA: MUC-LON, class F: 694€

Also, the provisos matching the ticket are filed by AF and BA in the IATA Prorate Manual Passenger and are the following:
- AF: for all trips within Europe with a normal fare, proviso is 100% of base amount
- BA: for all trips in Europe, SRP applies.

Accordingly, in Proviso Proration:
- Air France Proviso share: 644€*100% = 644€
- British Airways Proviso share: (1500-644)*(1206/1206) = 856€

The sum of all the Provisos is less than the total fare collected and the Prorate Rule Percentage of the prorate factor is (1500-644)/1206 = 0.71. The Prorate Rule Percentage is greater than the Minimum Prorate Rule Percentage, so the Proviso is applicable.

For this specific case, we can calculate that AF could file a Proviso as high as 1354€. BA share would be reduced to 146€ which is the minimum share satisfying the Minimum Prorate Rule Percentage of the prorate factor (146/1206 = 12.1%).

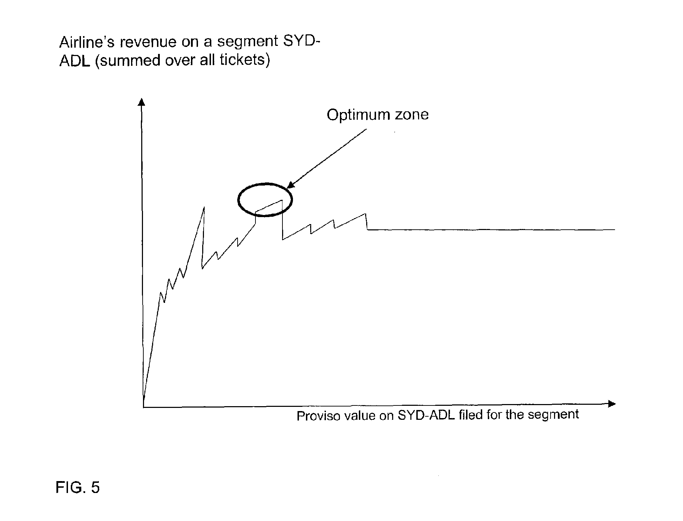

Specifically, the revenue earned by the airline (i.e. AF) is diagrammatically represented in FIG. 4. It is important to note that the highest share of revenue using provisos is not necessarily higher than the share of revenue using SRP and that when more than one segment uses SRP to calculate its interline revenue share, rounding errors may lead to the presence of a remaining value (usually a few cents) that will be attributed to the validating airline.
This process is repeated for all the tickets in which the airline provides a service on the segment and the results are summed up. The result, diagrammatically represented in FIG. 5, is then used to calculate the best proviso rule applicable for the segment.

## Claims

1. A carrier's interline revenue share optimization method, the carrier being involved in several interline multi-segment journeys with other partner carriers, each of the involved carriers operating at least one segment of the interline multi-segment journeys and each of these journeys being associated with a fare, the interline revenue share optimization method utilizing a computer system and comprising the steps of:
- receiving and storing in data structured storing means of the computer system memory, input data that comprises a) a fixed set of tickets including the journey and the associated fare, b) a fixed set of prorate factors, c) a fixed set of partner carriers' interline rules, d) a set of carrier's interline rules, e) an interline revenue share determining algorithm, and f) an optimization algorithm,
- defining the variables to optimize; in the set of carrier's interline rules composed of criteria and value, the criteria are fixed and the values are carrier's interline variables subject to the optimization,
- splitting the fares of the tickets between the carrier and the partner carriers and calculating an objective function as the carrier's interline revenue share,
- optimizing the objective function and obtaining the optimized set of carrier's interline variables by utilizing a processor of the computer system,
- providing via an output device of the computer system the optimized set of carrier's interline variables

2. The method according to claim 1 wherein the computer system comprises at least one server.

3. The method according to any of claims 1 to 2 wherein the interline revenue share determining algorithm splits the fare of the tickets between the carrier and the partner carriers.

4. The method according to claim 3 wherein the interline revenue share determining algorithm comprises prorating algorithms able to perform straight rate and proviso proration.

5. The method according to any of claims 1 to 4 wherein the optimization algorithm optimizes the carrier's interline variables.

6. The method according to any of claims 1 to 5 wherein the fixed set of tickets comprises historical and/or fictitious data.

7. The method according to any of claims 1 to 6 wherein the carrier's interline variables comprise the carrier's own Provisos.

8. The method according to claim 7 wherein the carrier's own Provisos include a set of variable base amounts and provisos percentages.

9. The method according to any of claims 1 to 8 wherein the fixed set of partner carriers' interline rules comprise a fixed set of Provisos.

10. The method according to claim 9 wherein the fixed set of Provisos include a set of base amounts and provisos percentages.

11. The method according to any of claims 1 to 10 wherein the fixed set of prorate factors is common to the carrier and the partner carriers.

12. The method according to any of claims 1 to 11 wherein a step of filtering the fixed set of tickets is performed for reducing the total amount of data to process.

13. The method according to claim 12 wherein the filtering step removes from the fixed set of tickets all tickets for which no Proviso exists.

14. The method according to any of claims 1 to 13 wherein the carrier assigns weights to the fixed set of tickets.

15. The method according to claim 14 wherein a weight of zero is applied to a set of tickets canceling the optimization process of the same.
